# EUROPEAN PATENT SPECIFICATION

(11) **EP 0 496 080 B1**
(45) Date of publication and mention of the grant of the patent: **11.10.1995**
(21) Application number: 91121531.7
(22) Date of filing: 16.12.1991
(51) Int. Cl.: B29B 17/00

(54) **A method of and machine for the utilisation of scrap plastics material**
Verfahren und Vorrichtung zur Verwendung von Kunststoffabfällen
Méthode et machine pour l'utilisation de déchêts de matière plastique

(30) Priority: 23.01.1991 GB 9101464
(43) Date of publication of application: 29.07.1992
(73) Proprietor: Hadley, Phillip Arthur, Four Oaks, Sutton Coldfield B74 4TJ (GB)
(72) Inventor: Hadley, Phillip Arthur, Four Oaks, Sutton Coldfield B74 4TJ (GB)
(74) Representative: Lally, William

(56) References cited:
- EP-A- 0 321 742
- WO-A-92/00838
- DE-A- 3 525 554
- FR-A- 2 622 833

## Description

This invention is concerned with the utilising of scrap plastics material, and will be described hereinafter as relating to the recycling of scrap polythene, specifically in sheet form. It is however to be appreciated that the invention may be used in the recycling of other types of scrap plastics material.

Polythene bags are being utilised more and more frequently as a means of disposing rubbish, and difficulty is encountered in reclaiming the bags when they have been used. In particular since bags for rubbish may be of relatively low grade, provided that a convenient and reliable means can be found for recycling the bags, the plastics material thereof may be used in the manufacture of new bags.

One of the main problems which occurs is that the bags are handled casually, and may be stored for a time in collection areas where they become wet through rain, and this makes subsequent handling by automatic machinery difficult.

The problem is exacerbated by the tendency for the bags to retain some of the originally-contained material on their inner sides.

A further difficulty is that where it is necessary to re-granulate the material, the energy requirement to effect this is high, and makes the process of dubious economic value.

There is known from FR-A-2,622,833 a device for the processing of used plastics material comprising a first chamber in which scrap plastics material may be deposited, means in the first chamber to melt scrap plastics material therein, a second chamber, means to maintain melted plastics material in the second chamber in molten conditions, molten plastics material in use being transferred from the first to the second chambers.

According to this invention there is provided a method of utilising scrap plastics material in which the scrap plastics is melted in a primary chamber and is transferred in molten conditions to a secondary chamber, from which the molten material is fed to an extrusion device for re-use whilst remaining in molten conditions, characterised by the use of a transfer means operative periodically to transfer molten material from the primary chamber to the secondary chamber in response to conditions attained in the primary chamber.

Preferably the transfer device operates in response to a sensing of the attainment of a desired material condition in the primary chamber, such as the attainment of a desired temperature and/or desired low humidity.

In this manner the primary chamber may operate as a batch processor, scrap material being fed thereto intermittently either manually or by conveyor, and the batch material being melted and transferred at an appropriate time to the secondary chamber, prior to reloading of the primary chamber.

The primary chamber may thus be open-topped, allowing for convenient entry of material into the chamber and for escape of venting gases from the chamber, whilst the secondary chamber may be substantially enclosed, allowing if desired a non-oxidising atmosphere to be maintained.

Thus the secondary chamber may operate as a holding chamber to which molten material is periodically added, allowing one or more extrusion devices to be run on a continuous or semi-continuous basis therefrom.

Preferably the plastics material is melted in the primary chamber by rotating blades: thus preferably the primary chamber is circular in plan, and preferably the melting material is retained in molten condition within the secondary chamber by rotating blades, the secondary chamber thus also being conveniently circular in plan. Thus whilst the primary and secondary chambers may be located side-by-side, conveniently they are in superposed relationship, allowing a single shaft to rotate both sets of blades.

According to this invention there is also provided a machine for the utilisation of scrap plastics material comprising:
[a] a first chamber in which scrap plastics material may be deposited;
[b] means in the first chamber to melt scrap plastics material therein;
[c] a second chamber;
[d] means to transfer molten plastics material from the first to the second chamber; and
[e] means to maintain melted plastics material in the second chamber in molten condition,
   characterised in that the transfer means is operative periodically in response to conditions attained in the first chamber.

Conveniently the means in the first chamber to melt scrap plastics material therein comprises a rotating blade assembly operative to comminute plastics material delivered to the first chamber, and means to rotate said blade assembly at high speed to melt said plastics material.

Preferably the first chamber comprises sensing means, preferably operative to sense the temperature of material in the first chamber, and preferably also operative to sense the humidity of the first chamber.

Advantageously the transfer means is operative in relation to the sensing means so as to transfer molten plastics material from the first chamber to the second chamber, on the attainment of desired temperature/humidity conditions.

Conveniently the first chamber may also comprise level sensing means, operative to sense the attainment of a high and low level of material within the container, and which is operative [for example] to terminate operation of the transfer means on detecting a minimum level of melton material in the first chamber, conveniently also being operative to signal a need for the delivery of further scrap material to the first chamber, and preferably which is operative to signal a cessation of the need for further material when the load sensed reaches a maximum level.
Conveniently the transfer means is afforded by a screw-conveyor, whereby communication between the first an second chambers is reduced.

Preferably the means to maintain melted plastics material in the second chamber in molten conditions is provided by a rotating blade assembly.

Preferably the machine comprises outlet means which may be connected to one or more ancillary devices, such as screw extruders, whereby molten plastics material may be withdrawn from the second chamber for use by said ancillary devices.

Alternatively a signal feeding mechanism may be utilised to convey the molten plastics material on demand to a plurality of user machines.

There will now be given a detailed description, to be read with reference to the accompany drawings, of a machine which is a preferred embodiment of the invention, having been selected for the purposes of illustrating the invention by way of example, and a modified form of said machine.

In the accompanying drawings:
FIGURE 1 is a schematic plan view of the preferred embodiment;
FIGURE 2 is a vertical sectional view of the preferred embodiment; and
FIGURE 3 is a plan view of a modified construction.

The machine which is the preferred embodiment of the invention comprises a generally cylindrical superstructure 6 having a circular base plate 8 and an intermediate circular dividing plate 10 to afford a first, upper chamber 12 and a second, lower chamber 14.

Mounted on the side of the superstructure 6 is a transfer means 16, comprising a generally cylindrical transfer tube 18 providing communication between an outlet opening 20 in the chamber 12 and an inlet opening 22 in the chamber 14, a screw conveyor 24 being mounted in the transfer tube 18 for axial rotation by drive motor 26.

Extending co-axially through the base plate 8 and plate 10 is an elongate shaft 26 carrying at its upper end a first rotating blade assembly 28, comprising a pair of diametrically opposed blades 30, and at an intermediate location, within the second chamber 14, a second blade assembly 32, comprising a pair of diametrically opposed blades 34.

Extending through the wall of the superstructure into a central region of the chamber 12 is a first sensing device afforded by a humidity probe 36, and extending into the lower part of the chamber 12 is a second sensing device afforded by a temperature probe 38.

Extending from the chamber 14 is a vent 42.

The second chamber is provided with an outlet 44, which opens into the barrel of a screw-extruder 46.

In the use of the device which is the preferred embodiment of the invention, in carrying out a method of recycling scrap plastics material which method is also illustrative of the invention, scrap polythene bags [for example] are loaded into the chamber 12 such as by conveyor 40 and the shaft 26 rotated at a relatively high speed, the blades 30 acting to comminute the plastics material and to cause the plastics material to melt. As the temperature of the plastics material increases, water and other liquids present are driven off, and when the humidity sensed by the probe 36 reaches a desired low value, and the temperature sensed by the temperature probe 38 reaches a desired high value, the transfer screw 24 is operated to transfer molten plastics material from the first chamber 12 into the second chamber 14, operation of the transfer screw 24 terminating when substantially all of the molten plastics material has been removed from the chamber 12, residual molten material within the flites of the screw conveyor 24 effectively sealing the chamber 14 from the chamber 12.

At this point further raw material maybe added to the chamber 12.

Molten plastics material delivered to the chamber 14 is retained molten by the action of the blade assembly 32, the chamber 14 effectively acting as a holding chamber to which further molten plastics material is delivered periodically by the transfer screw 24. In the meantime, the extruder 46 may operate to withdraw molten plastics material on demand from the chamber 14, allowing the extruder 46 to operate as desired, for example in the production of new plastics bags, without the need for the extruder to impart the normal heat requirements to the plastics material.

Conveniently a plurality of outlets corresponding to the outlet 44 are disposed around the chamber 14 allowing a plurality of extruders to be supplied from the chamber 14.

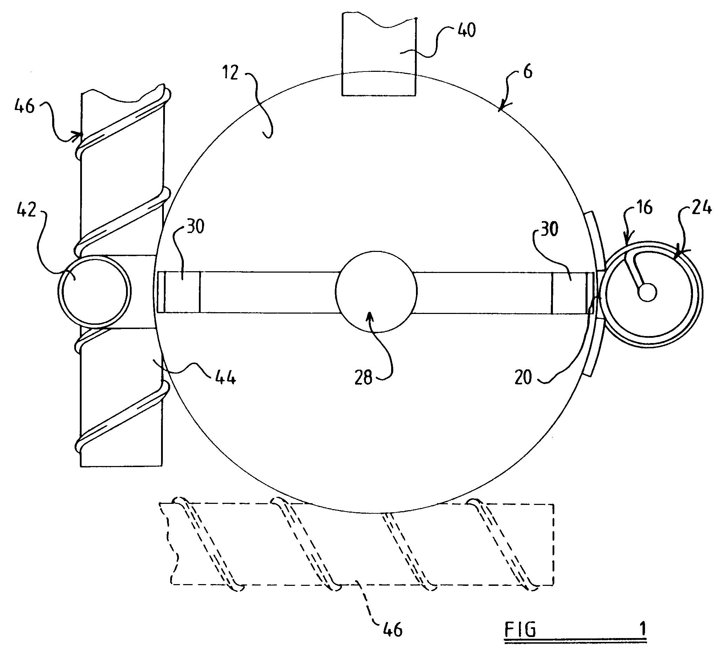

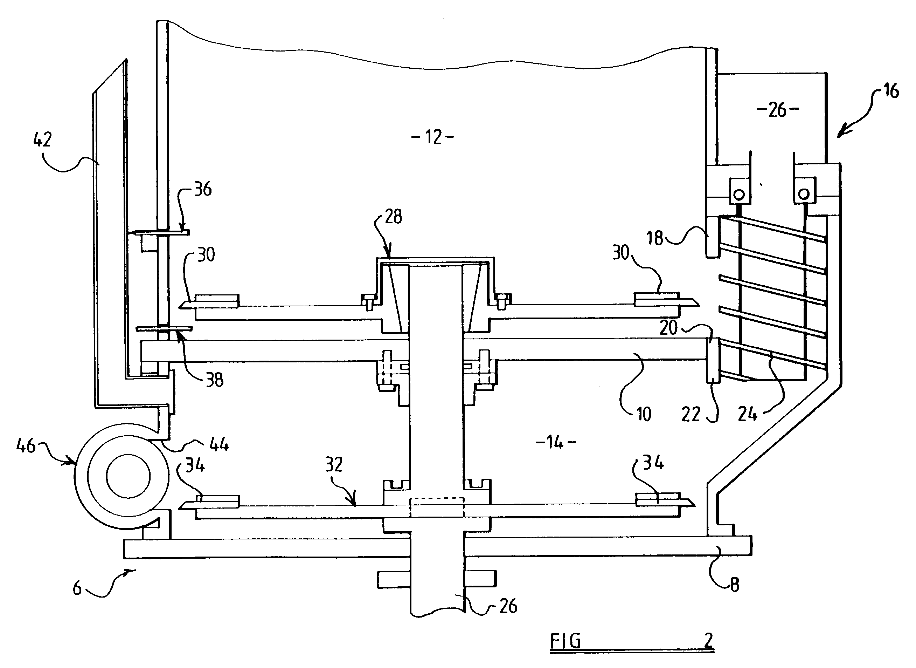

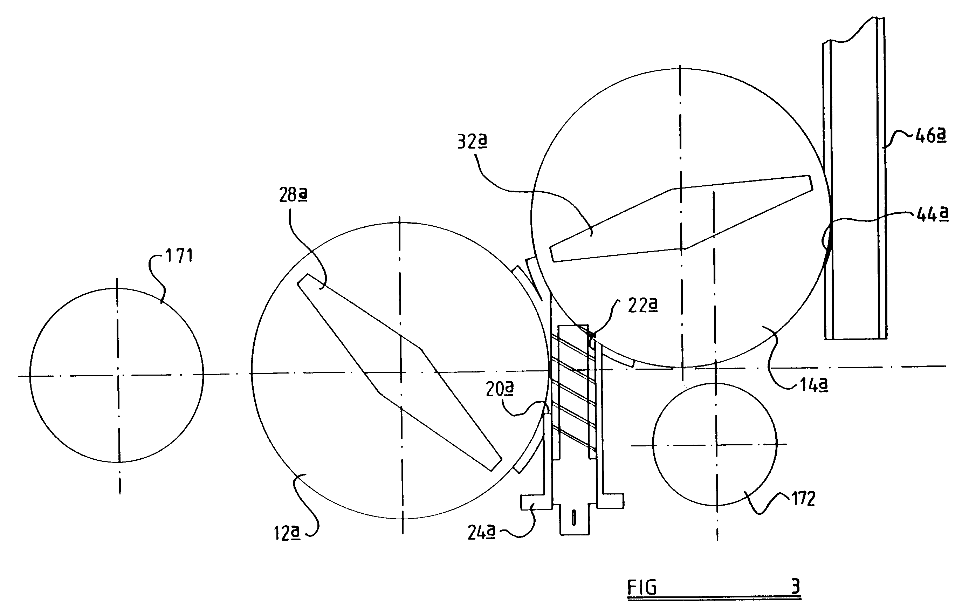

Whilst in the preferred embodiment illustrated in Figures 1 and 2 the chambers 12 and 14 are superposed, in the modified construction illustrated in Figure 3, in which similar numerals with the suffix a have been utilised to indicate parts similar to those of the preferred embodiment, the chambers 12a and 14a are located side-by-side, although conveniently with the chamber 12 located at a position higher than the chamber 14. In the modified construction, a delivery screw 46b is utilised to convey molten plastics material from the chamber 14a, conveniently to a manifold from which plastics material may be delivered to a number of work stations.

Additionally whilst in the second embodiment humidity and temperature probes may be utilised to determine the condition of the material within the chamber 12a, if desired a sensing means may be utilised which is operative to sense the current drawn by the motor 171 driving the blade assembly 28a, said current varying as the material in the first chamber 12a is reduced to a molten condition, and changing again on substantial completion of transfer of molten material from the chamber 12a to the chamber 14a.

## Claims

1. A method of utilising scrap plastics material in which the scrap plastics is melted in a primary chamber (12) and is transferred in molten condition to a secondary chamber (14), from which the molten material is fed to an extrusion device for re-use whilst remaining in molten condition;
characterised by the use of a transfer means (16, 26) operative periodically to transfer molten material from the primary chamber (12) to the secondary chamber (14) in response to conditions attained in the primary chamber.

2. A method according to claim 1 wherein the conditions to which the transfer means is responsive include the temperature of material in the first chamber, and/or the humidity of the first chamber.

3. A machine for the utilisation of scrap plastics material comprising:
[a] a first chamber (12) in which scrap plastics material may be deposited;
[b] means (28, 30) in the first chamber to melt scrap plastics material therein;
[c] a second chamber (14);
[d] means (16, 26) to transfer molten plastics material from the first to the second chamber; and
[e] means (32, 34) to maintain melted plastics material in the second chamber (14) in molten condition,
characterised in that the transfer means (16, 26) is operative periodically in response to conditions attained in the first chamber (12).

4. A machine according to Claim 3 wherein said means in the first chamber comprises a rotating blade assembly (28) operative to comminute plastics material delivered to the first chamber (12), and means to rotate said blade assembly at high speed.

5. A machine according to one of Claims 3 and 4 wherein the first chamber (12) comprises sensing means (36, 38), operative to sense the temperature of material in the first chamber, and/or to sense the humidity of the first chamber.

6. A machine according to one of Claims 3 to 5 wherein the transfer means (16, 26) is operative in relation to the sensing means (36, 38) so as to transfer molten plastics material from the first chamber (12) to the second chamber (14) on the attainment of desired temperature and/or humidity conditions.

7. A machine according to any one of Claims 3 to 6 wherein the first chamber (12) comprises level sensing means.

8. A machine according to any one of Claims 3 to 7 wherein said means in the second chamber is provided by a rotating blade assembly (32, 34).

9. A machine according to any one of Claims 3 to 7 comprising outlet means (46) which may be connected to one or more ancillary devices.

## Patentansprüche

1. Ein Verfahren zur Verwendung von Kunststoffabfällen, in dem die Kunststoffabfälle in einer Primärkammer (12) geschmolzen und in geschmolzenem Zustand in eine Sekundärkammer (14) überführt werden, aus der das geschmolzene Material einer Extrusionseinrichtung zur Wiederverwendung zugeführt wird, während es in geschmolzenem Zustand gehalten wird;
gekennzeichnet durch die Verwendung einer Überführungseinrichtung (16, 26), die periodisch arbeitet, um geschmolzenes Material in Abhängigkeit von Bedingungen, die in der Primärkammer erreicht werden, aus der Primärkammer (12) in die Sekundärkammer (14) zu überführen.

2. Ein Verfahren nach Anspruch 1, wobei die Bedingungen, auf die die Überführungseinrichtung anspricht, die Temperatur des Materials in der ersten Kammer und/oder die Feuchtigkeit der ersten Kammer einschließen.

3. Eine Maschine zur Verwendung von Kunststoffabfällen, welche umfaßt:
[a] eine erste Kammer (12), in der Kunststoffabfälle abgelagert werden können;
[b] Mittel (28, 30) in der ersten Kammer, um Kunststoffmaterial darin zu schmelzen;
[c] eine zweite Kammer (14);
[d] Mittel (16, 26), um geschmolzenes Kunststoffmaterial aus der ersten in die zweite Kammer zu überführen; und
[e] Mittel (32, 34), um geschmolzenes Kunststoffmaterial in der zweiten Kammer (14) in geschmolzenem Zustand zu erhalten,
dadurch gekennzeichnet. daß die Überführungseinrichtung (16, 26) in Abhängigkeit von Bedingungen, die in der ersten Kammer (12) erreicht werden, periodisch arbeitet.

4. Eine Maschine nach Anspruch 3, wobei besagte Mittel in der ersten Kammer eine Rotationsmesseranordnung (28), die so arbeitet, daß sie Kunststoffmaterial zerkleinert, das der ersten Kammer (12) zugeführt wird, und Mittel zur Rotation besagter Messeranordnung Mit hoher Geschwindigkeit umfaßt.

5. Eine Maschine nach einem der Ansprüche 3 und 4, wobei die erste Kammer (12) Meßfühler (36, 38) umfaßt, die so arbeiten, daß sie die Temperatur des Materials in der ersten Kammer abfühlen und/oder die Feuchtigkeit der ersten Kammer abfühlen.

6. Eine Maschine nach einem der Ansprüche 3 bis 5, wobei die Überführungseinrichtung (16, 26) in bezug auf die Messfühler (36, 38) so arbeitet, daß geschmolzenes Kunststoffmaterial bei Erreichen gewünschter Temperatur- und/oder Feuchtigkeitsbedingungen aus der ersten Kammer (12) in die zweite Kammer (14) überfuhrt wird.

7. Eine Maschine nach einem der Ansprüche 3 bis 6, wobei die erste Kammer (12) einen Meßfühler für die Füllhöhe umfaßt.

8. Eine Maschine nach einen der Ansprüche 3 bis 7, wobei besagte Mittel in der zweiten Kammer durch eine Rotationsmesseranordnung (32, 34) bereitgestellt werden.

9. Eine Maschine nach einem der Ansprüche 3 bis 7, die Auslaßmittel (46) umfaßt, die mit einer oder mehreren Zusatzeinrichtungen verbunden werden können.

## Revendications

1. Procédé d'utilisation des déchets de matière plastique dans lequel les déchets de matière plastique sont fondus dans une chambre primaire (12) et transférés ensuite à l'état fondu dans une chambre secondaire (14), depuis laquelle le matériau fondu est amené à un dispositif d'extrusion pour être réutilisé tout en restant à l'état fondu ; caractérisé par l'emploi d'un moyen de transfert (16, 26) destiné à fonctionner périodiquement pour transférer le matériau fondu de la chambre primaire (12) à la chambre secondaire (14) en réponse à des conditions réalisées dans la chambre primaire.

2. Procédé selon la revendication 1, dans lequel les conditions auxquelles répond le moyen de transfert comprennent la température du matériau dans la première chambre et/ou l'humidité de la première chambre.

3. Machine pour l'utilisation de déchets de matière plastique comprenant :
[a] une première chambre (12) dans laquelle les déchets de matière plastique peuvent être déposés ;
[b] des moyens (28, 30) à l'intérieur de la première chambre pour fondre les déchets de matière plastique contenus dans cette chambre ;
[c] une seconde chambre (14) ;
[d] un moyen (16, 26) pour tansférer la matière plastique fondue de la première couche à la seconde chambre ; et
[e] des moyens (32, 34) pour maintenir la matière plastique fondue à l'état fondu à l'intérieur de la seconde chambre (14) ;
caractérisée en ce que le moyen de transfert (16, 26) peut fonctionner périodiquement en réponse à des conditions réalisées dans la première chambre (12).

4. Machine selon la revendication 3, dans laquelle lesdits moyens situés dans la première chambre comprennent un ensemble de lame rotative (28) ayant pour fonction de fragmenter la matière plastique délivrée à la première chambre (12) et des moyens pour faire tourner ledit ensemble de lame à grande vitesse.

5. Machine selon la revendication 3 ou 4, dans laquelle la première chambre (12) comprend des moyens détecteurs (36, 38) utilisables pour détecter la température du matériau à l'intérieur de la première chambre et/ou pour détecter l'humidité dans la première chambre.

6. Machine selon l'une des revendications 3 à 5, dans laquelle le moyen de transfert (16, 26) peut fonctionner en liaison avec les moyens détecteurs (36, 38), de manière à transférer la matière plastique fondue de la première chambre (12) à la seconde chambre (14) lorsque les conditions souhaitées de température et/ou d'humidité sont atteintes.

7. Machine selon l'une quelconque des revendications 3 à 6, dans laquelle la première chambre (12) comprend des moyens détecteurs de niveau.

8. Machine selon l'une quelconque des revendications 3 à 7, dans laquelle lesdits moyens installés dans la seconde chambre sont constitués par un ensemble de lame rotative (32, 34).

9. Machine selon l'une quelconque des revendications 3 à 7, comprenant des moyens de sortie (46) qui peuvent être reliés à un ou plusieurs dispositifs auxiliaires.
